# EUROPEAN PATENT APPLICATION

(11) **EP 4 742 432 A1**
(43) Date of publication of application: **13.05.2026**
(21) Application number: 24854461.1
(22) Date of filing: 14.08.2024
(51) Int. Cl.: H01M 50/571, H01M 50/503, H01M 50/574

(54) **BATTERY MODULE**

(30) Priority: 16.08.2023 KR 20230107254
(71) Applicant: LG Energy Solution, Ltd., Seoul 07335 (KR)
(72) Inventor: SEON, Sang Ok, Daejeon 34122 (KR); SHIN, Jae Wook, Daejeon 34122 (KR); KIM, Jee Won, Daejeon 34122 (KR); LEE, Yong Seon, Daejeon 34122 (KR)
(74) Representative: Hoffmann Eitle
(86) International application number: PCT/KR2024/012105
(87) International publication number: WO 2025/037910

(57) **Abstract**

The present invention relates to a battery module, and more particularly, to a battery module in which components inside the battery module is prevented from corroding by an electrolyte leaking when the electrolyte leaks from a secondary battery inside the battery module, and short circuit is prevented from occurring inside the battery module, thereby ultimately improving safety of the entire module. A battery module according to the present invention includes a cell assembly provided with a plurality of secondary batteries, each of which is provided with a plurality of electrode leads, and which are arranged to be stacked in at least one direction, and a busbar assembly provided with a plurality of busbars, which is configured to electrically connect the plurality secondary batteries to each other and in which at least one through-hole is defined so that the electrode leads are inserted, and a busbar frame configured so that the plurality of busbars are mounted, wherein each of the busbars has an immersion area that is an area immersed in an electrolyte when the electrolyte leaks from the secondary batteries, wherein the immersion area is treated to prevent corrosion.

## Description

### TECHNICAL FIELD

### CROSS-REFERENCE TO RELATED APPLICATION

The present application claims the benefit of the priority of Korean Patent Application No. 10-2023-0107254, filed on August 16, 2023, which is hereby incorporated by reference in its entirety.

### TECHNICAL FIELD

The present invention relates to a battery module, and more particularly, to a battery module in which components inside the battery module is prevented from corroding by an electrolyte leaking when the electrolyte leaks from a secondary battery inside the battery module, and short circuit is prevented from occurring inside the battery module, thereby ultimately improving safety of the entire module.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Particularly, in terms of materials, there is a high demand for lithium secondary batteries such as lithium ion batteries and lithium ion polymer batteries that have advantages such as high energy density, a discharge voltage, and output stability.

Secondary batteries may be classified into cylindrical and prismatic batteries, in which an electrode assembly is built in a cylindrical or prismatic metal can, and pouch-type batteries, in which an electrode assembly is built in a pouch-type case made of an aluminum laminate sheet, depending on the shapes of the battery cases. However, an operating voltage of a unit cell, i.e., a unit battery cell is about 2.5 V to about 4.2 V.

Thus, when a higher output voltage is required, the secondary battery module is manufactured by connecting a plurality of individual battery cells, and the plurality of battery modules are assembled to constitute a battery pack.

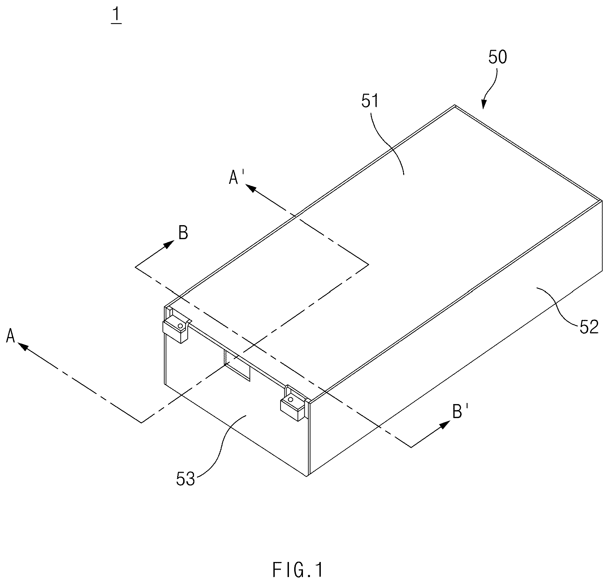

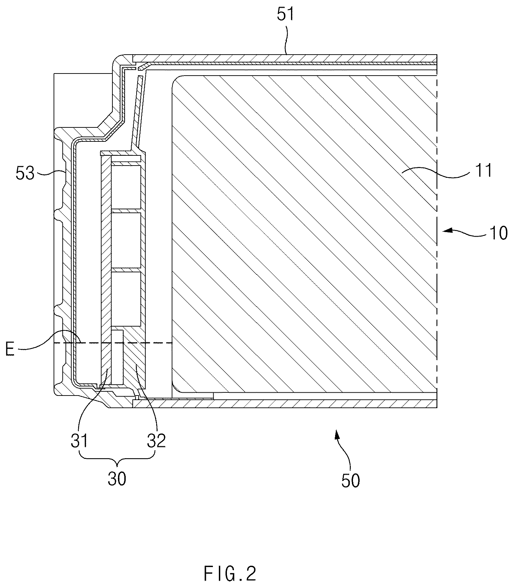

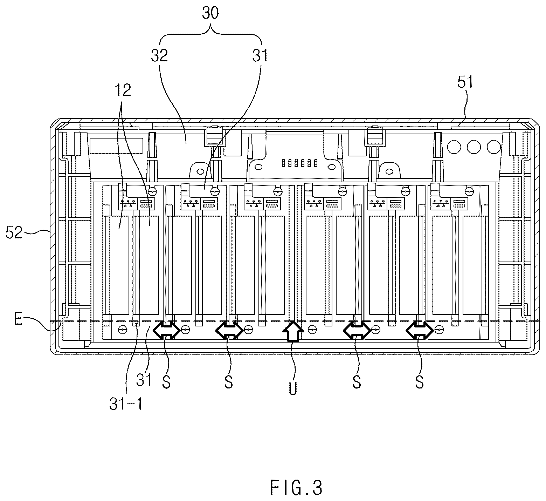

FIG. 1 is a perspective view of a battery module according to the related art. FIG. 2 is a cross-sectional view taken along line A-A' of FIG. 1. FIG. 3 is a cross-sectional view taken along the line B-B' of FIG. 1.

Referring to FIGS. 1 to 3, in a battery module 1 constituted by pouch-type secondary batteries 11, a cell assembly 10, in which a plurality of cells manufactured as the pouch-type secondary batteries 11 are stacked in a predetermined number, is mounted inside a module case having a rectangular shape. The module case 50 may include a top plate 51 covering an upper portion of the cell assembly 10, a side plate 52 covering a side surface of the cell assembly 10, and an endplate 53 coupled to the top plate 51 and the side plate 52 in a front and rear direction of the module case 50.

A busbar assembly 30 may be disposed between the endplate 53 and the cell assembly 10. The busbar assembly 30 includes a busbar 31 and a busbar frame 32.

The busbar 31 may have a shape in which a through-hole 31-1 is defined in a center of the rectangular plate configuration. The secondary battery 11 may be provided with an electrode lead 12 electrically connected to an internal electrode assembly to protrude, and the electrode lead 12 may be disposed on the busbar 31 to pass through the through-hole 31-1 and then be coupled to the busbar 31.

In the battery module 1, the secondary batteries may be electrically connected to each other in parallel and/or series. For this, one end of the electrode lead 12 may be fixed in contact with the busbar through welding to electrically connect the secondary batteries 11 to each other.

In addition, the busbar frame 32 may be a frame configuration capable of mounting the busbar 31. In order to apply a plurality of busbars 31, the busbar frame 32 made of an insulating material and capable of mounting the plurality of busbars 31 may be provided.

An electrolyte is injected into the secondary batteries 11 constituting the cell assembly 10. When using the battery module 1, the electrolyte may leak out of the secondary batteries 11. This may be called electrolyte leakage. If the electrolyte leaks, the electrolyte may be stagnated at a lower side of the module case 50. In addition, as an amount of electrolyte gradually increases, a level of the electrolyte may ascend toward an upper side of the module case 50.

Referring to FIGS. 2 and 3, the level of the leaking electrolyte is indicated by a dotted line E. The level of the electrolyte at the time of initial leakage is close to a bottom surface of the module case 50, but as the amount of leakage increases, and thus, the level of the electrolyte may gradually move upward U to ascend to a level E shown in FIGS. 2 and 3.

If the level of the electrolyte ascends significantly as described above, the busbar 31 may be immersed in the electrolyte. Corrosion may occur in a portion of the busbar 31 immersed in the electrolyte. In this case, short circuit may occur between the busbar 31 and the busbar 31.

FIG. 3 is illustrates a state in which the short circuit S occurs below the level E of the electrolyte. The short circuit may occur when a metal bridge is formed between the busbars due to an oxidation-reduction reaction, and the short circuit may also occur when the busbar 31 corrodes, and the corroding metal may falls off. In addition, the electrolyte itself may cause the short circuit by electrically connecting the plurality of busbars 31 to each other.

If the short circuit occurs as described above, battery safety may be significantly deteriorated, and serious problems such as fire or explosion may occur.

### DISCLOSURE OF THE INVENTION

### TECHNICAL PROBLEM

The present invention has been made to solve the above problems, and an object of the present invention is to a battery module in which components inside the battery module is prevented from corroding by an electrolyte leaking when the electrolyte leaks from a secondary battery inside the battery module, and short circuit is prevented from occurring inside the battery module, thereby ultimately improving safety of the entire module.

### TECHNICAL SOLUTION

A battery module according to the present invention includes a cell assembly provided with a plurality of secondary batteries, each of which is provided with a plurality of electrode leads, and which are arranged to be stacked in at least one direction, and a busbar assembly provided with a plurality of busbars, which is configured to electrically connect the plurality secondary batteries to each other and in which at least one through-hole is defined so that the electrode leads are inserted, and a busbar frame configured so that the plurality of busbars are mounted, wherein each of the busbars has an immersion area that is an area immersed in an electrolyte when the electrolyte leaks from the secondary batteries, wherein the immersion area is treated to prevent corrosion.

The busbar may be coated with an insulating material on the immersion area.

The insulating material may include epoxy.

The insulating material may be coated at a thickness of 200 um to 300 um.

The insulating material may be coated in at least one manner of dipping, air spray, and electrostatic coating methods.

In the busbar, the immersion area may be removed.

The through-hole may have an opened lower side.

The busbar may have a closed-loop shape.

The immersion area of the busbar may be folded to a residual area disposed above the immersion area.

The immersion area and the residual area may be connected to each other in the form of hinge coupling.

The immersion area may include an immersion area body, and a hinge protrusion protruding from an end of the immersion area body facing the residual area, and the residual area may include a residual area body, and a hinge recess recessed from an end of the residual area body facing the immersion area.

The hinge protrusion may include a first protrusion protruding in a direction from an end of the immersion area body to the residual area body, and a second protrusion protruding from a side surface of the first protrusion, and the hinge recess may have an area corresponding to that of the hinge protrusion so that the first protrusion and the second protrusion are inserted.

The immersion area may be folded by rotating around a virtual axis extending the second protrusion.

The immersion area may include an immersion area body, and a coupling protrusion protruding from an outer surface of the immersion area body, which faces the residual area, and the residual area may include a residual area body, and a coupling recess provided in a recessed shape in an outer surface of the residual area body, which is recessed from an outer surface facing the immersion area, wherein the coupling protrusion may be inserted into the coupling recess so that the immersion area is coupled to the residual area.

The coupling protrusion may include a pillar portion protruding from the outer surface of the immersion area body, and a hook portion protruding from a sides surface of the pillar portion, wherein the coupling recess may include a catch portion configured to allow the hook portion to be caught in the state in which the coupling protrusion is inserted.

The residual area may include a residual area body, and a coupling protrusion protruding from an outer surface of the residual area body, which faces the immersion area, and the immersion area may include an immersion area body, and a coupling recess provided in a recessed shape in an outer surface of the immersion area body, which is recessed from an outer surface facing the residual area, wherein the coupling protrusion may be inserted into the coupling recess so that the immersion area is coupled to the residual area.

The coupling protrusion may include a pillar portion protruding from the outer surface of the residual area body, and a hook portion protruding from a sides surface of the pillar portion, wherein the coupling recess may include a catch portion configured to allow the hook portion to be caught in the state in which the coupling protrusion is inserted.

### ADVANTAGEOUS EFFECTS

The battery module according to the present invention may include the cell assembly provided with the plurality of secondary batteries, each of which is provided with a plurality of electrode leads and which are arranged to be stacked in at least one direction, and the busbar assembly provided with the plurality of busbars, which electrically connect the plurality of secondary batteries to each other and each of which has the at least one through-hole so that the electrode lead is inserted, and the busbar frame configured to so that the plurality of busbars are mounted, and, in the busbar, when the electrolyte leads from the secondary battery, the immersion area, which is the area that is immersed in the electrolyte may be treated to be prevented from corroding, and thus, when the electrolyte leaks from the secondary batteries inside the battery module, it may prevent the internal components of the battery module from corroding by the leaking electrolyte and prevent the short circuit inside the battery module from occurring, thereby ultimately improving the safety of the entire module.

### BRIEF DESCRIPTION OF THE DRAWINGS

FIG. 1 is a perspective view of a battery module according to the related art.
FIG. 2 is a cross-sectional view taken along line A-A' of FIG. 1.
FIG. 3 is a cross-sectional view taken along the line B-B' of FIG. 1.
FIG. 4 is a perspective view of a battery module according to an embodiment of the present invention.
FIG. 5 is a cross-sectional view taken along line D-D' of FIG. 4.
FIG. 6 is a front view of a busbar in a battery module according to Embodiment 1 of the present invention.
FIG. 7 is a front view of a busbar in a battery module according to Embodiment 2 of the present invention.
FIG. 8 is a front view of a busbar in a battery module according to Embodiment 3 of the present invention.
FIG. 9 is a perspective view illustrating detailed configurations of the busbar in the battery module according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

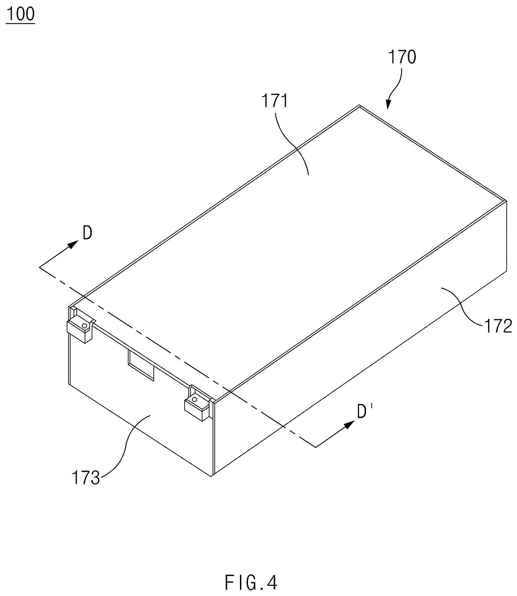

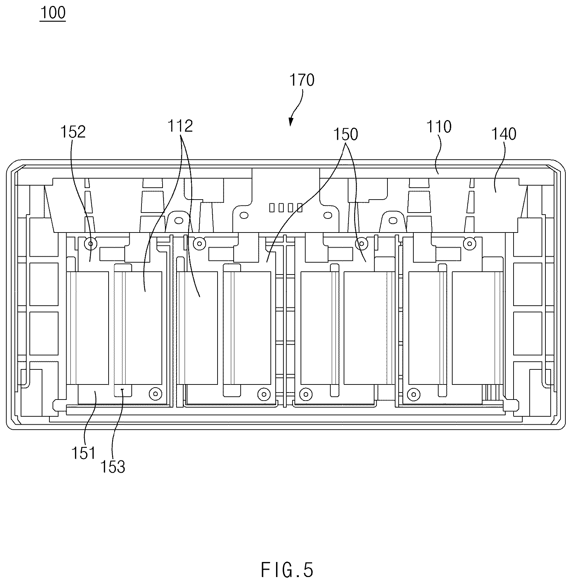

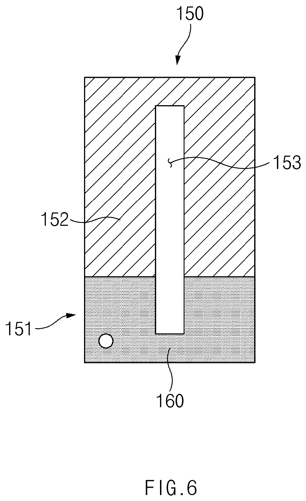

FIG. 4 is a perspective view of a battery module according to an embodiment of the present invention. FIG. 5 is a cross-sectional view taken along line D-D' of FIG. 4. FIG. 6 is a front view of a busbar in a battery module according to Embodiment 1 of the present invention.

Referring to FIGS. 4 and 5, a battery module 100 according to Embodiment 1 of the present invention may include a cell assembly 110 and a busbar assembly 130.

The cell assembly 110 may be an assembly including a plurality of secondary batteries (not shown). Each of the secondary batteries may be provided with a plurality of electrode leads 112, and the plurality of secondary batteries may be arranged to be stacked in at least one direction. Here, each of the secondary batteries may be a pouch-type secondary battery. In addition, the cell assembly 110 in which a plurality of cells manufactured as the pouch-type secondary batteries are stacked in a predetermined number may be mounted in a rectangular module case 170. In addition, the module case 170 may include a top plate 171 covering an upper portion of the cell assembly 110, a side plate 172 covering a side surface of the cell assembly 110, and an endplate 173 coupled to the top plate 171 and the side plate 172 in a front and rear direction of the module case 170.

A busbar assembly 130 may be disposed between the endplate 173 and the cell assembly 110. The busbar assembly 130 may include a busbar 150 and a busbar frame 140.

The busbar 150 may electrically connect the plurality of secondary batteries to each other and may have at least one through-hole 153 defined therein to allow the electrode leads 112 to be inserted. The busbar 150 may be provided in plurality. Specifically, the busbar 150 may have a shape in which the through-hole 153 is defined in a center of the rectangular plate configuration. Each of the electrode lead 112 electrically connected to the electrode assembly inside the secondary battery may protrude to the outside of a pouch exterior of the secondary battery, and the electrode lead 112 may pass through the through-hole defined in the busbar 150 and then be coupled to the busbar 150.

In the battery module 100, the secondary batteries may be electrically connected to each other in parallel and/or series. For this, one end of the electrode lead 112 may be fixed in contact with the busbar 150 through welding to electrically connect the secondary batteries to each other.

In addition, the busbar frame 140 may be a frame configuration capable of mounting the busbar 150. In order to apply a plurality of busbars 150, the busbar frame 140 made of an insulating material and capable of mounting the plurality of busbars 150 may be provided. For example, the plurality of busbars 150 may be mounted on one busbar frame 140. A busbar assembly 130 may include the busbar 150 and the busbar frame 140.

Referring to FIG. 6, in the battery module 100 according to Embodiment 1 of the present invention, the busbar 150 may have an immersion area 151 that is an area immersed in the electrolyte when the electrolyte leaks from the secondary battery, and the immersion area 151 may be treated to be prevented from corroding.

Specifically, the busbar 150 may include the immersion area 151, which is a portion immersed by the electrolyte when the electrolyte leaks from the secondary battery, and a residual area disposed above the immersion area 151. For example, the immersion area 151 may be a lower portion of the portion to which the electrode lead is attached. In addition, in this immersion area 151, the corrosion prevention treatment may be performed to prevent the corrosion from occurring.

Referring to FIGS. 5 and 6, in the battery module 100 according to Example 1 of the present invention, the busbar 150 may be coated with an insulating material 160 on the immersion area 151. The corrosion of the busbar 150 may be prevented by being coated with an insulating material 160. For example, the insulating material 160 may be a material containing epoxy. Thus, an insulation effect may be excellent.

When the immersion area 151 of the busbar 150 is immersed in the electrolyte, the corrosion may occur in the portion of the busbar 150, which is immersed in the electrolyte. In this case, short circuit may occur between the busbar 150 and the busbar 150.

The short circuit may occur when a metal bridge is formed between the busbars 150 due to an oxidation-reduction reaction, and the short circuit may also occur when the busbar 150 corrodes, and the corroding metal may falls off. In addition, the electrolyte itself may cause the short circuit by electrically connecting the plurality of busbars 150 to each other. If the short circuit occurs as described above, battery safety may be significantly deteriorated, and serious problems such as fire or explosion may occur.

Thus, in the battery module 100 according to Example 1 of the present invention, the immersion area 151 of the busbar 150 may be coated with the insulating material 160 to prevent the internal components of the battery module 100 from corroding. In addition, the short circuit of the battery module may be prevented from occurring, thereby ultimately improving the safety of the entire module.

In the battery module 100 according to Embodiment 1 of the present invention, the insulating material 160 may be applied to the immersion area 151 in at least one manner of dipping, air spray, or electrostatic coating manners.

The dipping manner may be a manner of coating the immersion area 151 with the insulating material 160 by immersing the busbar 150 in a solution of the insulating material 160 in a state of covering the residual area 152 by using a mask and exposing the immersion area 151.

The air spray manner may be a manner of spraying the solution of the insulating material onto the busbar 150 using a spray in the state of covering the residual area 152 with the mask and exposing the immersion area 151 to apply the insulating material 160 to the immersion area 151. The spray may spray the insulating material 160 onto both sides of the busbar 150 at the same time, and in this case, the insulating material may be quickly and effectively applied.

Electrostatic coating may be a technology that applies powder paint in a solid form that does not contain a solvent or thinner in an electrostatic spraying manner and then heats and melts the paint to form a film. Specifically, a positive electrode may be attached to an object to be coated, and a negative electrode may be attached to the object to be coated by static electricity, and then, the insulating material may be heated and melted to form a film of the insulating material 160.

When the immersion area 151 is coated, the insulating material 160 may be applied at a thickness of 200 um to 300 um. If the thickness of the insulating material 160 to be applied at a thickness thinner than 200 um, maintaining power of the coating may be relatively weak, and if the thickness of the insulating material 160 to be applied at a thickness thicker than 200 um, a volume may increase, and production costs such as material costs may unnecessarily increase.

### Embodiment 2

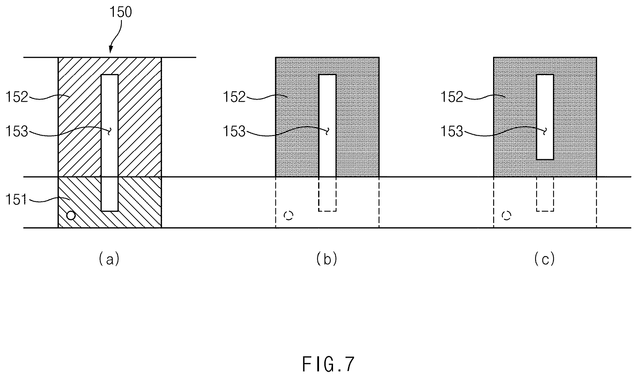

FIG. 7 is a front view of a busbar in a battery module according to Embodiment 2 of the present invention.

Embodiment 2 of the present invention is different from Embodiment 1 in that an immersion area of a busbar is removed to prevent corrosion.

Contents in common with Embodiment 1 will be omitted as much as possible, and Embodiment 2 will be described focusing on differences. That is, it is obvious that if contents that are not described in Embodiment 2 are needed, it may be regarded as the contents of Embodiment 1.

Referring to FIG. 7, in a battery module according to Embodiment 2 of the present invention, an immersion area 151 of a busbar 150 may be removed. The deletion of the immersion area 151 may mean that a portion of the immersion area 151 is cut by a cutting device or the like. Alternatively, other than the cutting, it may mean that the immersion area 151 is removed from the busbar 150 in a different manner.

FIG. 7(a) is a view illustrating the busbar 150 before the immersion area 151 is removed, and FIG. 7(b) is a view illustrating the busbar 150 after the immersion area 151 is removed. Referring to FIG. 7(b), as the immersion area 151 is removed, a through-hole 153 of the busbar 150 may be in a form of which a lower side is opened. Since the immersion area 151 is removed in this manner, even if an electrolyte leaks, the busbar 150 may be prevented from corroding. Therefore, it is possible to prevent short circuit inside the battery module, thereby ultimately improving safety of the entire module.

In case of the deletion, it has an advantage of achieving a faster corrosion prevention effect with lower production costs. In addition, since a portion of the busbar 150 is removed, a weight of the busbar 150 may be reduced, and thus, a weight of the entire battery module may also be reduced.

Referring to FIG. 7(c), after the immersion area 151 is removed, the busbar 150 may have a form in which a lower side of the through-hole 153 is not opened. That is, the busbar 150 may have a closed-loop shape. In this manner, a width of a route through which current moves may be relatively wider, and thus, advantages such as resistance reduction and increasing current allowable capacity may be obtained.

### Embodiment 3

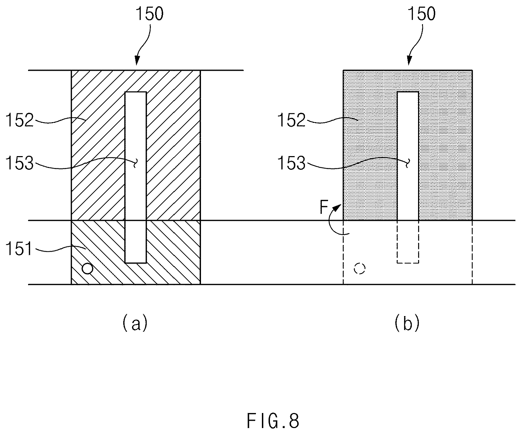

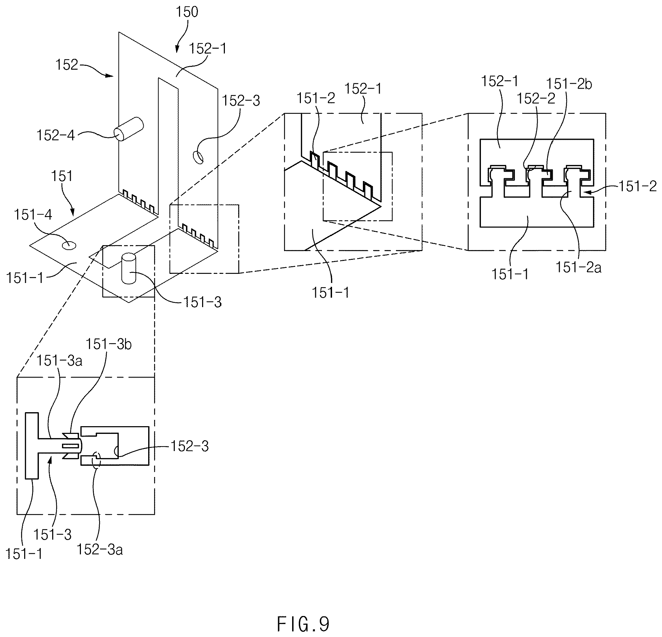

FIG. 8 is a front view of a busbar in a battery module according to Embodiment 3 of the present invention. FIG. 9 is a perspective view illustrating detailed configurations of the busbar in the battery module according to Embodiment 3 of the present invention.

Embodiment 3 of the present invention is different from Embodiments 1 and 2 in that an immersion area of a busbar is folded to prevent corrosion.

The contents in common with Embodiment 1 1 will be omitted as much as possible, and Embodiment 3 will be described focusing on differences. That is, it is obvious that if content that is not described in Embodiment 3 is needed, it may be regarded as the contents of Embodiments 1 and 2.

Referring to FIG. 8, in a battery module according to Embodiment 3 of the present invention, an immersion area 151 of a busbar 150 may be folded. Specifically, the busbar 150 may be folded to a residual area 152 disposed above the immersion area 151 (see arrow F).

The fact that the immersion area 151 is folded may mean that it is folded by a hinge or the like and may also include any other form that is bent or folded.

FIG. 8(a) is a view illustrating the busbar 150 before the immersion area 151 is folded, and FIG. 8(b) is a view illustrating the busbar 150 after the immersion area 151 is folded. Referring to FIG. 8(b), as the immersion area 151 is folded, a lower immersion area 151 of the busbar 150 may have the form that is no longer immersed in the electrolyte.

Since the immersion area 151 is folded in this manner, even if the electrolyte leaks, the busbar 150 may be prevented from corroding. Therefore, it is possible to prevent short circuit inside the battery module, thereby ultimately improving safety of the entire module.

In case of the folding manner, unlike in the case of the deletion, there is an advantage in that the effect of preventing the corrosion is obtained while maintaining a cross-sectional area of the busbar 150 without reducing the cross-sectional area. That is, in case of deletion, the cross-sectional area of the busbar 150 may be reduced to reduce an intensity of the allowable current. However, in the case of the folding manner, the cross-sectional area of the busbar 150 may be maintained, and thus, the effect of the corrosion prevention may be achieved without reducing the intensity of the allowable current.

Referring to FIG. 9, the immersion area 151 and the residual area 152 may be connected in the form of hinge coupling. To implement the hinge-coupled configuration, the present invention may include a special configuration.

Specifically, the immersion area 151 may include an immersion area body 151-1 and a hinge protrusion 151-2. The immersion area body 151-1 may be configured as a main body that is folded upward into the residual area 152. The immersion area body 151-1 may have a ' 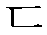 ' shape. The hinge protrusion 151-2 may be configured to protrude from an end of the immersion area body 151-1 facing the residual area 152.

Here, the hinge protrusion 151-2 may include a first protrusion 151-2a and a second protrusion 151-2b. The first protrusion 151-2a may be a portion that protrudes from an end of the immersion area body 151-1 in a direction facing a residual area body 152-1. The second protrusion 151-2b may be a portion protruding from a side surface of the first protrusion 151-2a.

The residual area 152 may include a residual area body 152-1 and a hinge recess 152-2. The residual area body 152-1 may be a configuration of the main body that meets the folded immersion area 151. The residual area body 152-1 may also have a ' 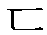 ' shape. However, the immersion area body 151-1 and the residual area body 152-1 may have different sizes or lengths. The hinge recess 152-2 may be a recessed portion at an end of the residual area body 152-1 facing the immersion area 151.

Since the hinge protrusion 151-2 has a configuration of the first protrusion 151-2a and the second protrusion 151-2b, the hinge recess 152-2 may be formed to correspond to a shape of the hinge protrusion 151-2 so that the first protrusion 151-2a and the second protrusion 151-2b are inserted.

Due to this configuration, the immersion area 151 may be folded while rotating in the state in which the hinge protrusion 151-2 is inserted into the hinge recess 152-2. Specifically, the immersion area 151 may be folded by rotating around a virtual axis defined by extending the second protrusion 151-2b. As the immersion area 151 is folded, the immersion area 151 and the residual area 152 may overlap each other.

In addition, the battery module according to Embodiment 3 of the present invention may further include a special structure in which the immersion area 151 is fixed in the folded state.

Specifically, the immersion area 151 may include an immersion area body 151-1 and a coupling protrusion 151-3. The coupling protrusion 151-3 may be configured in the form of a protrusion that protrudes from an outer surface of the immersion area body 151-1 facing the residual area 152.

Here, the coupling protrusion 151-3 may again include a pillar portion 151-3a and a hook portion 151-3b. The pillar portion 151-3a may be configured in the shape of a pillar protruding from the outer surface of the immersion area body 151-1, and the hook portion 151-3b may be configured in the shape of protruding from a side surface of the pillar portion 151-3a. The hook portion may have a hook shape, and an end of the hook portion 151-3b may also have a triangular shape or a pointed shape.

The residual area 152 may include a residual area body 152-1 and a coupling recess 152-3 corresponding to the immersion area 151. The coupling recess 152-3 may be a recess defined in a recessed shape in an outer surface of the residual area body 152-1 facing the immersion area 151. Thus, the coupling protrusion 151-3 may be inserted into the coupling recess so that the immersion area 151 is coupled to the residual area 152. Due to this combination, the immersion area 151 may be fixed to the residual area 152 in the folded state.

In addition, the coupling recess 152-3 may include a catch portion 152-3a that allows the hook portion 151-3b to be caught when the coupling protrusion 151-3 is inserted. This may allow for more firm coupling.

In addition, referring to FIG. 9, a coupling protrusion 152-4 may be disposed on the residual area 152, and a coupling recess 151-4 may be defined in the immersion area 151.

In addition, referring to FIG. 9, a coupling protrusion 151-3 may be disposed at one side of the immersion area body 151-1, a coupling recess 151-4 may be defined at the other side, and thus, a coupling recess 152-3 may be defined at one side of the residual area body 152-1, and a coupling protrusion 152-4 may be disposed at the other side.

The specific form in which the coupling protrusion 152-4 is defined on the residual area 152 may be as follows. That is, the residual area 152 may include a residual area body 152-1 and a coupling protrusion 152-4 protruding from an outer surface of the residual area body 152-1 that faces the immersion area 151, and the immersion area 151 may include a coupling recess 151-4 provided in a shape recessed from an outer surface of the immersion area body 151-1 and an immersion area body 151-1 that faces the residual area 152. Thus, the coupling protrusion 152-4 may be inserted into the coupling recess 151-4 so that the immersion area 151 is coupled to the residual area 152.

In this case, the coupling protrusion 152-4 disposed on the residual area body 152-1 may include a pillar portion protruding from an outer surface of the residual area body 152-1 and a hook portion (not shown) protruding from a side surface of the pillar portion. In addition, the coupling recess 151-4 defined in the immersion area body may include a catch portion (not shown) that allows the hook portion to be caught in the state in which the coupling protrusion 152-4 is inserted.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Battery module
110: Cell assembly
130: Busbar assembly
140: Busbar frame
150: Busbar
151: Immersion area
151-1: Immersion area body
151-2: Hinge protrusion
151-2a: First protrusion
151-2b: Second protrusion
151-3: Coupling protrusion
151-3a: Pillar portion
151-3b: Hook portion
151-4: Coupling recess
152: Residual area
152-1: Residual area body
152-2: Hinge recess
152-3: Coupling recess
152-3a: Catch portion
152-4: Coupling protrusion
153: Through-hole
160: Insulating material
170: Module case
171: Top plate
172: Side plate
173: Endplate

## Claims

1. A battery module comprising:
a cell assembly provided with a plurality of secondary batteries, each of which is provided with a plurality of electrode leads, and which are arranged to be stacked in at least one direction; and
a busbar assembly provided with a plurality of busbars, which is configured to electrically connect the plurality secondary batteries to each other and in which at least one through-hole is defined so that the electrode leads are inserted, and a busbar frame configured so that the plurality of busbars are mounted,
wherein each of the busbars has an immersion area that is an area immersed in an electrolyte when the electrolyte leaks from the secondary batteries, wherein the immersion area is treated to prevent corrosion.

2. The battery module of claim 1, wherein the busbar is coated with an insulating material on the immersion area.

3. The battery module of claim 2, wherein the insulating material comprises epoxy.

4. The battery module of claim 2, wherein the insulating material is coated at a thickness of 200 um to 300 um.

5. The battery module of claim 2, wherein the insulating material is coated in at least one manner of dipping, air spray, and electrostatic coating methods.

6. The battery module of claim 1, wherein, in the busbar, the immersion area is removed.

7. The battery module of claim 6, wherein the through-hole has an opened lower side.

8. The battery module of claim 6, wherein the busbar has a closed-loop shape.

9. The battery module of claim 1, wherein the immersion area of the busbar is folded to a residual area disposed above the immersion area.

10. The battery module of claim 9, wherein the immersion area and the residual area are connected to each other in the form of hinge coupling.

11. The battery module of claim 10, wherein the immersion area comprises:
an immersion area body; and
a hinge protrusion protruding from an end of the immersion area body facing the residual area, and
the residual area comprises:
a residual area body; and
a hinge recess recessed from an end of the residual area body facing the immersion area.

12. The battery module of claim 11, wherein the hinge protrusion comprises:
a first protrusion protruding in a direction from an end of the immersion area body to the residual area body; and
a second protrusion protruding from a side surface of the first protrusion, and
the hinge recess has an area corresponding to that of the hinge protrusion so that the first protrusion and the second protrusion are inserted.

13. The battery module of claim 12, wherein the immersion area is folded by rotating around a virtual axis extending the second protrusion.

14. The battery module of claim 9 or 10, wherein the immersion area comprises:
an immersion area body; and
a coupling protrusion protruding from an outer surface of the immersion area body, which faces the residual area, and
the residual area comprises:
a residual area body; and
a coupling recess provided in a recessed shape in an outer surface of the residual area body, which is recessed from an outer surface facing the immersion area,
wherein the coupling protrusion is inserted into the coupling recess so that the immersion area is coupled to the residual area.

15. The battery module of claim 14, wherein the coupling protrusion comprises:
a pillar portion protruding from the outer surface of the immersion area body; and
a hook portion protruding from a sides surface of the pillar portion,
wherein the coupling recess comprises a catch portion configured to allow the hook portion to be caught in the state in which the coupling protrusion is inserted.

16. The battery module of claim 9 or 10, wherein the residual area comprises:
a residual area body; and
a coupling protrusion protruding from an outer surface of the residual area body, which faces the immersion area, and
the immersion area comprises:
an immersion area body; and
a coupling recess provided in a recessed shape in an outer surface of the immersion area body, which is recessed from an outer surface facing the residual area,
wherein the coupling protrusion is inserted into the coupling recess so that the immersion area is coupled to the residual area.

17. The battery module of claim 16, wherein the coupling protrusion comprises:
a pillar portion protruding from the outer surface of the residual area body; and
a hook portion protruding from a sides surface of the pillar portion,
wherein the coupling recess comprises a catch portion configured to allow the hook portion to be caught in the state in which the coupling protrusion is inserted.
